# EUROPÄISCHE PATENTSCHRIFT

(11) **EP 2 082 013 B1**
(45) Veröffentlichungstag und Bekanntmachung des Hinweises auf die Patenterteilung: **12.04.2017**
(21) Anmeldenummer: 07846494.8
(22) Anmeldetag: 16.10.2007
(51) Int. Cl.: C10J 3/64

(54) **VERFAHREN ZUR ERZEUGUNG EINES WASSERSTOFFREICHEN PRODUKTGASES**
METHOD FOR PRODUCING A PRODUCT GAS RICH IN HYDROGEN
PROCÉDÉ POUR PRÉPARER UN PRODUIT GAZEUX RICHE EN HYDROGÈNE

(30) Priorität: 18.10.2006 DE 102006049701; 06.02.2007 DE 102007005799
(43) Veröffentlichungstag der Anmeldung: 29.07.2009
(73) Patentinhaber: Blue Tower GmbH, 45699 Herten (DE)
(72) Erfinder: Mühlen, Heinz-Jürgen, 44651 Herne (DE)
(74) Vertreter: Platzöder, Michael Christian
(86) Internationale Anmeldenummer: PCT/EP2007/008943
(87) Internationale Veröffentlichungsnummer: WO 2008/046578

(56) Entgegenhaltungen:
- WO-A-01/68789
- WO-A-96/32163
- WO-A-99/31197
- DE-A1-102006 019 452
- DE-B- 1 090 632
- DE-C1- 19 945 771
- US-A- 4 110 193

## Beschreibung

Die Erfindung betrifft ein Verfahren zur Erzeugung eines wasserstoffreichen Produktgases mit hohem Heizwert aus einem Ausgangsmaterial in Form von organischen Stoffen oder Stoffgemischen, bei welchem das Ausgangsmaterial in einer Pyrolysezone durch Pyrolyse in einen festen, kohlenstoffhaltigen Rückstand und Pyrolysegas als flüchtige Phase aufgespalten wird und die Pyrolysegase mit Wasserdampf als Reaktionsmittel vermischt und in einer Reaktionszone derart nacherhitzt werden, dass ein Produktgas mit hohem Heizwert entsteht, wobei die für die Pyrolyse und die Nacherhitzung erforderliche Wärme zumindest zum größten Teil aus der Verbrennung, der festen, kohlenstoffhaltigen Rückstände der Pyrolyse stammt und der Anlage durch ein als Wärmeträger dienendes, im Kreislauf gefahrenes Schüttgut zugeführt wird, welches in einer Aufheizzone mit Rauchgasen aus der Verbrennung der kohlenstoffhaltigen Rückstände aufgeheizt wird, anschließend in der Reaktionszone mit dem Gemisch aus Pyrolysegas und Wasserdampf in Kontakt gebracht wird, sodann zumindest einen Teil seiner fühlbaren Wärme in die Pyrolysezone einbringt und anschließend mittels eines Schüttgutsförderers an den Anfang des Wärmeträgerkreislaufes zurückgeführt wird.

Ein derartiges Verfahren ist beispielsweise aus der EP 1 226 222 B1 und der Schwesteranmeldung DE 19945771 C1 bekannt. Bei diesem Verfahren gelangt das als Wärmeträger verwendete Schüttgut innerhalb der Pyrolysezone in direkten Kontakt mit dem stückig oder feinstückig eingebrachten Ausgangsmaterial und muss anschließend mechanisch oder fluidmechanisch (Windsichtung) von dem in der Pyrolyse entstandenen Pyrolysekoks abgetrennt werden. Dieser Schritt kann durch die Beschaffenheit des erzeugten Kokses schwierig sein, ist aber auch generell durch den Umstand erschwert, dass er bei ca. 550 ° C zu erfolgen hat. Bei dieser verhältnismäßig hohen Temperatur ist der Pyrolysekoks ein extrem zündwilliger und brennbarer Stoff. Ein weiterer Nachteil dieses Verfahrens liegt darin, dass das als Wärmeträger dienende Schüttgut mit 550 ° C wieder in die Aufheizzone zurückgeführt werden muss. Der Umgang mit einem derart heißen Schüttgut ist aufwändig. Ein weiterer Nachteil besteht darin, dass durch diese verhältnismäßige hohe Temperatur die Sockeltemperatur des Prozesses definiert wird. Wärmeströme unterhalb dieser Temperatur sind nicht mehr unmittelbar in dem Prozess nutzbar, weil sie exergetisch zu geringwertig sind. Ein weiterer Nachteil besteht darin, dass die Temperatur des Produktgases am Ausgang des Verfahrens bei 950 ° C liegt, so dass neben der üblicherweise notwendigen Reinigung des Gases auch noch eine Abkühlung von dieser sehr hohen Temperatur vorgenommen werden muss.

Nach dem Stand der Technik sind indirekt beheizte Pyrolyseapparate bekannt (Vergl. Contherm-Anlage im RWE-Kraftwerk Hamm-Uentrop, erbaut durch die Firma Technip GmbH). Diese indirekt beheizten Pyrolyseapparate vermeiden den Nachteil der sonst erforderlichen Trennung von Pyrolysekoks und Wärmeträgermedium.

Weiterhin sind als "Pyrator-Vergaser" (Druckschrift der Firma NRP Natur-Rohstoff-Pyrolyse GmbH, an der Aitrangerstr. 7, 87847 Unterthingau, Deutschland) Wasserdampfvergaser bekannt, die in einem Schritt den zu vergasenden organischen Stoff in einem indirekt, zum Beispiel mit Produktgas beheizten Pyrolyserohr zu Pyrolysekoks umsetzen und dann das Pyrolysegas mit dem Koks in einer weiteren Vergasungsreaktion umsetzen, um so ein wasserstoffreiches Produktgas zu gewinnen. Dabei wird das Ausgangsmaterial mit einer Förderschnecke durch das Pyrolyserohr hindurchgefördert und auf dieses Weise mit der beheizten Rohrwand in Kontakt gebracht.

Aufgabe der vorliegenden Erfindung ist es, das Verfahren der eingangs genannten Art dahingehend weiterzubilden, dass einerseits der Vorteil der Wärmeeinbringung mit Hilfe des Wärmeträgerkreislaufes genutzt wird, das heißt ein intensiver Wärmeaustausch bei stehts sauberen Heizflächen erreicht wird, und bei dem aber andererseits die problematische Trennung von Wärmeträger (Schüttgut) und Pyrolysekoks vermieden wird. Weiterhin soll bei dem neuen Verfahren dem Produktgas soweit wie möglich Wärme entzogen werden, bei wenigstens teilweiser Entfernung von etwa im Produktgas vorhandenem Teer. Schließlich soll das Verfahren wärmetechnisch verbessert werden, das heißt es sollen mehr Abwärmemengen eingekoppelt und soweit wie möglich im Verfahren nutzbar gemacht werden.

Zur Lösung dieser Aufgabe schlägt die Erfindung ausgehend vom Verfahren der eingangs genannten Art vor, dass in dem Wärmeträgerkreislauf vor der Aufheizzone eine Vorheizzone vorgesehen ist, in welcher das Schüttgut mit dem aus der Reaktionszone kommenden heißen Produktgas vorgeheizt wird und dabei den größten Teil von dessen Wärme aufnimmt, und dass die Wärmeübertragung vom Schüttgut auf das Ausgangsmaterial in der Pyrolysezone indirekt und ohne unmittelbaren Kontakt mit dem Schüttgut erfolgt.

Das Verfahren gemäß der Erfindung wird nach wie vor mit einem Wärmeträgerkreislauf aus Schüttgut betrieben. Der Wärmeträgerkreislauf wird jedoch im Unterschied zum Stand der Technik gemäß EP 1 226 222 B1 durch eine der Aufheizzone vorgeschaltete Vorheizzone erweitert, in der einerseits das Produktgas abgekühlt wird und andererseits das als Wärmeträger dienende Schüttgut vorgeheizt wird. Die Abkühlung des Produktgases in dieser Vorheizzone geht soweit, dass bereits ein großer Teil der hochsiedenen Teere aus dem Produktgas abgeschieden wird. Zugleich wird das Produktgas von einem großen Teil des mitgeführten Staubes befreit. Insbesondere verbleibt durch diese Maßnahme ein großer Teil der zunächst im Produktgas enthaltenen Wärme im Wärmeträgerkreislauf und bleibt somit dem Prozess erhalten. Ein weiterer wesentlicher Vorteil des Verfahrens gemäß der Erfindung gegenüber dem Stand der Technik gemäß EP 1 226 222 B1 besteht darin, dass das als Wärmeträger dienende Schüttgut in der Pyrolysezone nicht mehr direkt mit dem Ausgangsmaterial in Berührung kommt. Das hat einerseits den Vorteil, dass das als Wärmeträger dienende Schüttgut nicht mehr von den bei der Pyrolyse zurückbleibenden festen Pyrolyseprodukten getrennt zu werden braucht. Andererseits ist es mit diesem Verfahrensschritt ohne weiteres möglich, den Wärmeträger erheblich weiter abzukühlen, zum Beispiel auf eine Sockeltemperatur von 220°C oder weniger. Bei einer so niedrigen Sockeltemperatur gestaltet sich der Rücktransport des als Wärmeträger dienenden Schüttgutes an den Anfang des Wärmeträgerkreislaufes erheblich einfacher. Außerdem lassen sich die Wärmeverluste im Bereich des Schüttgutförderers erheblich verringern.

Die Pyrolyse des Ausgangsmaterials wird zweckmäßig in einen Temperaturbereich von 500°C bis 700°C durchgeführt, vorzugsweise in einem Temperaturbereich von 550°C bis 650°C Dieser Temperaturbereich lässt sich beim Verfahren gemäß der Erfindung besonders exakt einstellen und einhalten.

Weiterhin ist vorgesehen, dass das Gemisch aus Pyrolysegas und Wasserdampf in der Reaktionszone auf 750°C bis 1000°C vorzugsweise auf 900°C bis 1000°C erhitzt wird. Bei Einhaltung dieser Temperaturbereiche ist die Wasserstoffausbeute am besten.

Um die auch als Reformierung bezeichnete Reaktion in der Reaktionszone weiter zu verbessern, kann diese in Anwesenheit eines Katalysators durchgeführt werden.

Dabei wird ein die Reaktion beschleunigender Katalysator dem als Wärmeträger dienenden Schüttgut zugegeben und mit diesem im Kreis gefahren. Dies ist ohne weiteres möglich, weil beim Verfahren gemäß der Erfindung das als Wärmeträger dienende Schüttgut und der diesem zugegebenen Katalysator nicht direkt mit dem Ausgangsmaterial in Kontakt kommen. Aus dem gleichen Grund ist außerdem der Verbrauch an Katalysatormaterial minimal.

Der als Schüttgut im Kreislauf gefahrene Wärmeträger besteht vorzugsweise aus feuerfesten Stoffen wie Sand, Kies, Splitt, Aluminosilikat, Korund, Grauwacke, Quarzit oder Cordierit. Alle diese Stoffe sind mechanisch ausreichend stabil, feuerfest und gegenüber den anderen anwesenden Stoffen inert, so dass sie lange Zeit in diesem Kreislauf verbleiben können.

Alternativ können die Wärmeträger auch aus keramischen Formkörpern bestehen, wobei die keramische Mischung so gewählt wird, dass die daraus gebrannte Keramik den obigen Anforderungen optimal gerecht wird. Zweckmäßig erfolgt der Transport des Wärmeträgers in dem Wärmeträgerkreislauf bis auf den Bereich des Schüttgutförderers ausschließlich durch Schwerkraft. Wie bereits oben erläutert, kann die Temperatur des als Wärmeträger im Kreislauf gefahrenen Schüttgutes im Bereich des Schüttgutförderers auf eine Sockeltemperatur von weniger als 220°C abgesenkt werden, so dass dort der Schüttgutförderer problemlos arbeiten kann. In allen anderen Bereichen erfolgt der Transport durch Schwerkraft, was den besonderen Vorteil hat, dass dort keine maschinellen Mittel benötigt werden, mit denen das Schüttgut in Bewegung versetzt wird.

Das Verfahren gemäß der Erfindung sieht vor, dass die indirekte Wärmeübertragung vom Wärmeträger auf das Ausgangsmaterial in der Pyrolysezone über ein intermediäres, gasförmiges Heizmedium erfolgt, welches in einer Abkühlzone des Wärmeträgerkreislaufes aufgeheizt wird und anschließend einen Teil der aufgenommenen Wärme über den Heizmantel eines Pyrolyseapparates an das zu pyrolysierende Ausgangsmaterial abgibt, wobei der Wärmeträgerkreislauf in der Abkühlzone vor Eintritt in den Schüttgutförderer auf eine Temperatur zwischen Umgebungstemperatur und 200°C abgekühlt wird. Die Verwendung dieses intermediären, gasförmigen Heizmediums macht es möglich, einerseits die oben erwähnte Sockeltemperatur am Ende des Wärmeträgerkreislaufes und andererseits die für die Pyrolyse erforderliche Temperatur gezielt auf die benötigten Werte einzustellen.

Gegebenenfalls können die Abkühlzone des Wärmeträgerkreislaufes einerseits und der Heizmantel des Pyrolyseapparates andererseits in einem Gehäuse zur einem einheitlichen Aggregat zusammengefasst sein. Dieses Aggregat wird von dem oben erwähnten intermediären Heizmedium durchströmt, welches einerseits das als Wärmeträger verwendete Schüttgut abkühlt und andererseits das den Pyrolyseapparat durchlaufende Ausgangsmaterial erhitzt.

Damit keine Wärme verloren geht, ist weiterhin vorgesehen, dass die in dem gasförmigen Heizmedium hinter der Pyrolysezone verbleibende Restwärme zur Erzeugung des für den Prozess benötigten Wasserdampfes verwendet wird.

Weiterhin ist zur Vermeidung von Wärmeverlusten vorgesehen, dass das die Aufheizzone des Wärmeträgerkreislaufes verlassende Rauchgas zur Vorerwärmung der Verbrennungsluft für die Verbrennung der festen, kohlenstoffhaltigen Rückstände der Pyrolyse verwendet wird.

Zwei Ausführungsbeispiele der Erfindung werden im Folgenden anhand der Zeichnung näher erläutert. Es zeigen:
- Fig. 1: schematisch den Verfahrensablauf in einer ersten Ausführungsform:
- Fig. 2: den gleichen Verfahrensablauf mit einem geänderten Pyrolyseapparat.

Die Hauptverfahrenslinie besteht aus der Zugabe des Ausgangsmaterials 1 in Form von organischen Stoffen oder Stoffgemischen, der Pyrolysezone 2 mit dem Heizmantel 2a, der Reaktionszone 3, auch Reformer genannt, in dem das Pyrolysegas zusammen mit dem am Aufgabepunkt 9 innerhalb der Pyrolysezone 2 als Reaktionsmittel zugegebenen Dampf weiter aufgeheizt wird, sodann der erfindungsgemäß vorgesehenen zusätzlichen Vorheizzone 4, in der das Produktgas aus der Reaktionszone 3 abgekühlt und teilgereinigt wird, so dass ein relativ staub- und teerarmes Produktgas 5 als Produkt des Verfahrens abgegeben wird. Das Reaktionsmittel Dampf wird aus zugeführtem Wasser 8a in einem Sattdampfkessel 8 erzeugt. Durch die Gestaltung des Kessels 8 und die Wahl der Dampfparameter (Sattdampf von unter 20 bar) sind die Anforderungen an die Qualität des eingesetzten Wassers 8a recht gering.

Durch die Wahl der Verfahrensparameter, d. h. atmosphärischen Systemdruck, Temperatur von bis zu 700°C am Ende der Pyrolysezone 2 und 950°C rohgasseitig am Ende der Reaktionszone 3, sowie der Dampfmenge, die zu Wasserdampfkonzentrationen von über 30 Vol.-% im ungekühlten Produktgas führt, wird erreicht, dass die Wasserstoffkonzentration mit über 35 Vol.-% und der Heizwert mit typischerweise mehr als 9 MJ/Nm³ sehr hoch sind. Ergänzend ist zu dem atmosphärischen Systemdruck anzumerken, dass vor allem aus Sicherheitsgründen die Anlage generell mit leichtem Überdruck betrieben wird, vorzugsweise mit bis zu 200 hPa, was aber auf die Kinetik der in dem beschriebenen Verfahren praktisch ohne Auswirkung bleibt.
Beheizt wird diese Hauptverfahrenslinie durch einen Wärmeträgerkreislauf mit einem senkrecht nach oben verlaufenden Schüttgutförderer 6 und den sich anschließenden Streckenabschnitten 6a bis 6i. Vorzugsweise erfolgt die Förderung des Wärmeträgers in den Abschnitten 6a bis 6i ausschließlich durch Schwerkraft. Lediglich im Bereich des senkrecht nach oben führenden Schüttgutförderers 6 wird mit Maschinenkraft gefördert.
Im Wärmeträgerkreislauf sind weiterhin technisch gasdichte Schleusen 7a bis 7d angeordnet, weil in den vom Schüttgut in der Reihenfolge Vorheizzone 4 - Aufheizzone 13 - Reaktionszone 3 - Abkühlzone 19 durchlaufenen Apparaten unterschiedlicher Atmosphären herrschen, je nachdem von welchem Gas der jeweilige Apparat durchströmt wird. Als Wärmeträgermedien kommen alle mineralischen und temperaturwechselbeständigen Materialien als körnige Schüttgüter in gleicher Weise wie in der EP 1 226 222 B1 in Betracht: Sand, Kies, Splitt, Korund, Aluminosilikat, generell oxidische Keramikmaterialien u. a. Der Temperaturverlauf des Wärmeträgerkreislaufes gestaltet sich wie folgt: Wenn man sehr geringe Wärmeverluste im Schüttgutförderer 6 unterstellt, dann markieren die Temperaturen an den Punkten 6a und 6i den Temperatursockel, der durch ein weiter unten eingeführtes, intermediäres Heizgas 17 definiert wird, welcher eine Temperatur im Temperaturbereich von Umgebungstemperatur bis 200°C hat. Dies ist ein Zwangspunkt in dem Prozess. Dagegen ist das Temperaturniveau in den Punkten 6c und 6d a priori nicht bestimmt, sondern hängt ganz wesentlich von der im Prozess gebildeten Produktgasmenge und -qualität ab. Dieses Temperaturniveau sollte sich im Bereich von 550 bis 900°C einpendeln. Dagegen ist das Temperaturniveau an den Punkten 6e und 6f wiederum ein Zwangspunkt, der durch die Abgastemperatur der Feuerung 11 mit dem Rauchgas 12 recht genau eingestellt werden kann und im Bereich von 1050°C bis 1100°C liegt. Die Temperatur an den Punkten 6g und 6h hängt dagegen stark vom Verlauf der Pyrolyse ab und ist daher a priori nicht bestimmt. Die Pyrolysetemperatur liegt vorzugsweise im Bereich von 550°C bis 700°C, so dass die Wärmeträgertemperatur etwas höher,

vorzugsweise bis zu 100 °K höher, liegen wird, wobei das Idealziel bei 0 °K Abstand zur Pyrolysetemperatur liegt.
Die wesentliche zur Durchführung des Prozesses benötigte Wärmemenge wird, wie beim Stand der Technik, in der Aufheizzone 13 auf einem hohen Temperaturniveau von 1050°C bis 1100°C in den Wärmeträgerkreislaufes eingekoppelt. Dies geschieht durch direkte Wärmeübertragung von einem Rauchgas 12, das durch Verbrennen des in der Pyrolyseapparat 2 erzeugten Pyrolysekokses 10 in der Feuerung 11 erhalten wird, auf die Schüttgutpartikel beim Durchströmen der in der Aufheizzone 13 befindlicher Wärmeträgerschüttung. Danach wird die im Rauchgas noch enthaltene Restwärme noch in einem Wärmetauscher 14 zur Erwärmung der in der Feuerung 11 benötigten Verbrennungsluft 16 genutzt, bevor es als gekühltes Rauchgas 15 an eine weitergehenden Reinigung oder - falls möglich - an die Umgebung abgegeben wird.
Wie bereits oben angemerkt, stellt das intermediäre, gasförmige Heizmedium 17, mit dessen Hilfe der Wärmeträgerkreislauf an seinem Ende abgekühlt wird, wonach das auf diese Weise erwärmte, gasförmige Heizmedium die eigentliche Pyrolyse beheizt, einen wesentlichen Teil der Erfindung dar, die zusammen mit der Vorheizzone 4 das hier beschriebenen Verfahren zu einem gegenüber dem Stand der Technik wohl unterschiedenen, neuen Prozess macht.
Dieses intermediäre, gasförmige Heizmedium 17 kann ein Rauchgas oder aber auch Umgebungsluft sein. Ersteres hätte den Vorteil, dass auf diese Weise noch geringe Restwärmen im Prozess genutzt werden könnten. Auf jeden Fall sollte das intermediäre, gasförmige Medium 17 nicht über 200°C warm sein, da dessen Temperatur nach Durchtritt durch einen Verdichter 18 die gegenüber dem bisherigen Stand der Technik stark verminderte Sockeltemperatur definiert, die dem Wärmeträgerkreislauf in einen zur Pyrolysezone gehörenden Abkühlzone 19 aufgeprägt wird. In dieser Abkühlzone 19 wird das intermediäre, gasförmige Heizmedium 17 in etwa auf die Temperatur aufgeheizt, die der Wärmeträgerkreislauf nach Verlassen der Reaktionszone 3 aufweist, also im Allgemeinen 600°C bis 800°C. Im Heizmantel 2a des Pyrolyseapparates 2 gibt das intermediäre Heizmedium 17 einen großen Teil seiner Wärme ab. Danach wird es in einem Kessel 8 dazu genutzt, den für den Prozess benötigten Prozessdampf zu erzeugen. Dabei wird der Kessel gasseitig (8b) von dem intermediären Heizmedium durchströmt. Danach verlässt das intermediäre Heizmedium die Anlage als Stoffstrom 20.

Grundsätzlich ist es möglich, dem Stoffstrom 20 weitere Wärme zu entziehen oder dieses im Kreis zu führen.

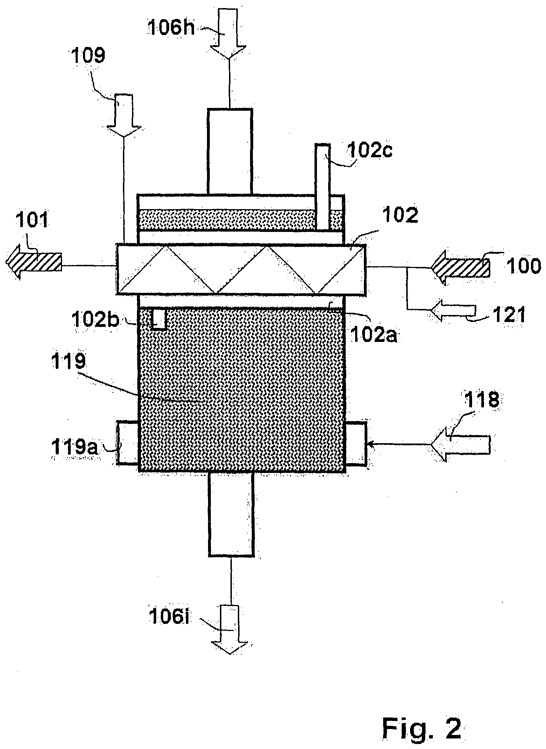

Nach einer alternativen Ausgestaltung kann das erfindungsgemäße Verfahren auch mit einem kompakten Pyrolyseapparat ausgestattet sein, wie in Fig. 2 gezeigt. Hier ist die als Pyrolysekompaktapparat ausgeführte Abkühlzone mit dem Bezugszeichen 119 bezeichnet und weist eine Pyrolyseschnecke 102 auf, in die das Ausgangsmaterial eintritt und aus der die Pyrolyseprodukte 101 austreten. In die Abkühlzone 119 wird das intermediäre Heizmedium 118 über einen Verteilerring 119a eingeführt, um so die in der Abkühlzone befindlichen Wärmeträgerschüttung gleichmäßig zu durchströmen und diese dabei abzukühlen.

Danach wird das intermediäre Heizmedium 118 durch den Einlass 102b in einen Heizmantel 102a einer innerhalb des Kompaktapparates liegenden Pyrolyseschnecke 102 geführt. Das abgekühlte intermediäre Heizmedium verlässt den Heizmantel dann über den Auslass 102c. Der eintretende Wärmeträgerstrom 106h kann dabei die Abkühlzone 119 komplett füllen, wie in Fig. 2 angedeutet. Der abgekühlte Wärmeträgerstrom 106i verlässt dabei den Apparat mit der Temperatur des eintretenden intermediären Heizmediums 118. Ein möglicher Punkt für die Dampfzuführung in die Pyrolyse ist mit dem Bezugszeichen 109 angedeutet. Diese Anordnung ist aber nicht zwingend; der Dampf kann auch an einer davor liegenden Stelle eingeführt werden.

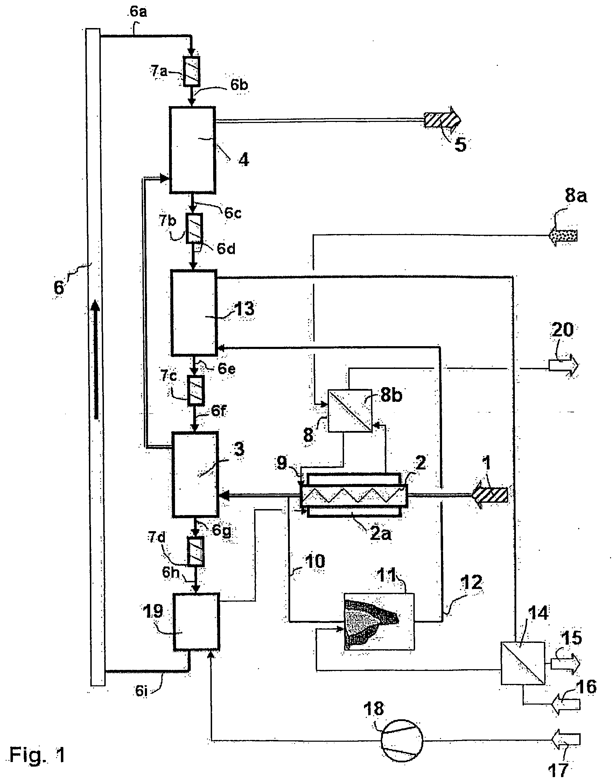

Eine weitere vorteilhafte Ausführung ist ebenfalls in Fig. 2 angedeutet. Mit einem Stoffstrom 121 kann in die Pyrolyse in geringen Mengen Luft eingeführt werden, wodurch die Gasausbeute in der Pyrolyse bedeutend erhöht werden kann. Dies ist bedeutsam, weil der durch die besondere Wärmeführung bewirkte höhere Kaltgaswirkungsgrad nur erzielt werden kann, wenn die Koksmenge so gering ist, dass die Leistung der Prozessfeuerung 11 in Fig. 1 über die variable Rückführung von Produktgas gesteuert werden kann. Demgegenüber wäre ein Koksüberschuss ohne Zusatznutzen in der Feuerung 11 lediglich abzubrennen.

Am Beispiel lässt sich die Wirkungsweise wie folgt verdeutlichen:
Eingesetzt werde eine holzartige Biomasse mit einer Restfeuchte von 20 %, die im trockenen Zustand einen Aschegehalt von 2,7 % aufweist. Die Menge betrage 573 Kg/h roh entsprechend der Feurungswärmeleistung von 2,254 MW. Die Biomasse möge in der Pyrolyse zu 95 % umgesetzt werden, das heißt 5 % des eingesetzten Materials ohne den Wasseranteil soll in das Produktgas übergehen, so dass ein Flugkoks mit 54 % Ascheanteilen entsteht, wobei 46 % des verbliebenen, verbrennlichen Materials zu 92 % aus Kohlenstoff bestehen. Es entstehen 870 Nm³h eines Produktgases mit 46,5 % Wasserstoff und einem Heizwert von 11,7 MJ/Nm³, wobei Wasserstoffkonzentration und Heizwert jeweils auf das trockene Produktgas bezogen sind, das im Übrigen 30 Vol.-% Wasserdampf beinhaltet. Damit wird ein Kaltgaswirkungsgrad von 87,6 % erhalten. Dabei wurde ein Verlust von 50 KW durch Wärmeabstrahlung angenommen, sowie eine Restverlust von 129 KW Wärme im Produktgas, das mit 220°C abgegeben wird. Hierin sind 110 KW Kondensationswärme des im Rohproduktgas enthaltenen Wasserdampfanteiles enthalten.

### Bezugszeichenliste

- 1: Ausgangsmaterial
- 2: Pyrolysezone
- 2a: Heizmantel
- 3: Reaktionszone
- 4: Vorheizzone
- 5: Produktgas
- 6: Schüttgutförderer
- 7: Schleusen
- 8: Sattdampfkessel
- 9: Dampfaufgabe
- 10: Pyrolysekoks
- 11: Feuerung
- 12: Rauchgas
- 13: Aufheizzone
- 14: Wärmetauscher
- 15: Rauchgas (gekühlt)
- 16: Verbrennungsluft
- 17: intermediäres Heizgas
- 18: Verdichter
- 19: Abkühlzone
- 20: Stoffstrom

- 100: Ausgangsmaterial
- 101: Pyrolyseprodukte
- 102: Pyrolyseschnecke
- 102a: Heizmantel
- 102b: Einlass
- 102c: Auslass
- 106h: eintretender Wärmeträgerstrom
- 106i: abgekühlter Wärmeträgerstrom
- 109: Dampfzuführung
- 118: intermediäres Heizmedium
- 119: Abkühlzone
- 119a: Verteilerring
- 122: Stoffstrom (Luft)

## Patentansprüche

1. Verfahren zur Erzeugung eines wasserstoffreichen Produktgases mit hohem Heizwert aus einem Ausgangsmaterial in Form von organischen Stoffen oder Stoffgemischen, bei welchem das Ausgangsmaterial in einer Pyrolysezone (2) durch Pyrolyse in einen festen, kohlenstoffhaltigen Rückstand und Pyrolysegas als flüchtige Phase aufgespalten wird und die Pyrolysegase mit Wasserdampf als Reaktionsmittel vermischt und in einer Reaktionszone (3) derart nacherhitzt werden, dass ein Produktgas mit hohem Heizwert entsteht, wobei die für die Pyrolyse und die Nacherhitzung erforderliche Wärme zumindest zum größten Teil aus der Verbrennung der festen, kohlenstoffhaltigen Rückstände der Pyrolyse stammt und der Anlage durch ein als Wärmeträger dienendes, im Kreislauf gefahrenes Schüttgut zugeführt wird, welches in einer Aufheizzone(13) mit den Heizgasen aus der Verbrennung der kohlenstoffhaltigen Rückstände aufgeheizt wird, anschließend in der Reaktionszone (3) mit dem Gemisch aus Pyrolysegas und Wasserdampf in Kontakt gebracht wird, sodann zumindest einen Teil seiner fühlbaren Wärme in die Pyrolysezone (2) einbringt und anschließend mittels eines Schüttgutförderers (6) an den Anfang des Wärmeträger Kreislaufes zurückgeführt wird, **dadurch gekennzeichnet, dass** in dem Wärmeträgerkreislauf vor der Aufheizzone (13), in welcher der Wärmeträgerkreislauf auf eine Temperatur von 1050 °C bis 1100 °C aufgeheizt wird, eine Vorheizzone(4) vorgesehen ist, in welcher das Schüttgut mit dem aus der Reaktionszone (3) kommenden, heißen Produktgas vorgeheizt wird und dabei den größten Teil von dessen Wärme aufnimmt, und dass die Wärmeübertragung vom Wärmeträgerkreislauf auf das Ausgangsmaterial in der Pyrolysestufe (2) indirekt und ohne unmittelbaren Kontakt mit dem Schüttgut über ein intermediäres, gasförmiges Heizmedium (17) erfolgt, welches in einer Abkühlzone (19) des Wärmeträgerkreislaufes aufgeheizt wird und anschließend einen Teil der aufgenommenen Wärme in der Pyrolysezone (2) über den Heizmantel eines Pyrolyseapparates an das zu pyrolisierende Ausgangsmaterial abgibt, wobei der Wärmeträgerkreislauf in der Abkühlzone (19) vor Eintritt in den Schüttgutförderer (6) auf eine Temperatur zwischen der Umgebungstemperatur und 200° C abgekühlt wird.

2. Verfahren nach Anspruch 1, **dadurch gekennzeichnet, dass** die Pyrolyse des Ausgangsmaterials in einem Temperaturbereich von 500 °C bis 700 °C durchgeführt wird, hierbei bevorzugt in einem Temperaturbereich von 550 °C bis 650 °C

3. Verfahren nach Anspruch 1 oder 2, **dadurch gekennzeichnet, dass** das Gemisch aus Pyrolysegas und Wasserdampf in der Reaktionszone (3) auf 750 °C bis 1000 °C, vorzugsweise auf 900 °C bis 1000 °C erhitzt wird.

4. Verfahren nach einem der Ansprüche 1-3, **dadurch gekennzeichnet, dass** die Reaktion in der Reaktionszone (3) in Anwesenheit eines Katalysators durchgeführt wird.

5. Verfahren nach Anspruch 4, **dadurch gekennzeichnet, dass** ein die Reaktion beschleunigender Katalysator dem im Kreislauf gefahrenen Wärmeträger zugegeben wird und mit diesem im Kreislauf gefahren wird.

6. Verfahren nach einem der Ansprüche 1-5 **dadurch gekennzeichnet, dass** der im Kreislauf gefahrener Wärmeträge aus feuerfesten Stoffen wie Sand, Kies, Splitt, Aluminosilikat, Korund, Grauwacke, Quarzit oder Cordierit besteht.

7. Verfahren nach einem der Ansprüche 1-5, **dadurch gekennzeichnet, dass** der im kreislaufgefahrener Wärmeträger aus keramischen Formkörpern besteht.

8. Verfahren nach einem der Ansprüche 1-7, **dadurch gekennzeichnet, dass** der Transport des Wärmeträgers in dem Wärmeträgerkreislauf bis auf den Bereich des Schüttgutförderers (6) ausschließlich durch Schwerkraft erfolgt.

9. Verfahren nach Anspruch 1, **dadurch gekennzeichnet, dass** die Abkühlzone (119) des Wärmeträgerkreislaufes und der Heizmantel (102a) des Pyrolyseapparates (102) in einem Gehäuse zu einem einheitlichen Aggregat zusammengefasst sind.

10. Verfahren nach Anspruch 1, **dadurch gekennzeichnet, dass** die in dem intermediären, gasförmigen Heizmedium (18) hinter der Pyrolysezone (2) verbleibende Restwärme zur Erzeugung des für den Prozess benötigten Wasserdampfes verwendet wird.

11. Verfahren nach Anspruch 1, **dadurch gekennzeichnet, dass** das die Aufheizzone (13) verlassende Rauchgas (12) zur Erwärmung der Verbrennungsluft (16) für die Verbrennung des festen, kohlenstoffhaltigen Rückstandes der Pyrolyse verwendet wird.

## Claims

1. Method for producing a product gas rich in hydrogen, having a high heating value, from a starting material in the form of organic substances or substance mixtures, in which the starting material is split up into a solid residue containing carbon and pyrolysis gas as a volatile phase, in a pyrolysis zone (2), by means of pyrolysis, and the pyrolysis gases are mixed with steam as a reactant, and subsequently heated in a reaction zone (3), in such a manner that a product gas having a high heating value is formed, whereby the heat required for the pyrolysis and the subsequent heating is derived, at least for the most part, from the combustion of the solid residues of pyrolysis that contain carbon, and is supplied to the system as a bulk material that serves as a heat carrier, transported in a circuit, which is heated in a heating zone (13) with the heating gases from the combustion of the residues that contain carbon, subsequently brought into contact with the mixture of pyrolysis gas and steam in the reaction zone (3), then introduces at least part of its palpable heat into the pyrolysis zone (2), and subsequently is passed back to the beginning of the heat carrier circuit by means of a bulk material conveyor (6), **characterized in, that** ahead of the heating zone (13), in which the heat carrier circuit is heated up to a temperature of 1050°C, a preheating zone (4) is provided, in which preheating zone (4) the bulk material is preheated with the hot product gas that comes from the reaction zone (3), and, in this connection, takes up the greatest part of its heat, and that the heat transfer from the heat carrier circuit to the starting material in the pyrolysis stage (2) takes place indirectly and without direct contact with the bulk material by way of an intermediary gaseous heating medium (17), which is heated up in a cool down zone (19) of the heat carrier circuit and subsequently gives up, by way of the heating mantle of a pyrolysis apparatus, a part of the heat absorbed in the pyrolysis zone (2) to the starting material to be pyrolysed, whereby the heat transfer circuit is cooled in the cool down zone (19) ahead of the entry into the bulk material conveyor (6) to a temperature between environmental temperature and 200°C .

2. Method according to claim 1, **characterized in that** the pyrolysis of the starting material is carried out in a temperature range of 500°C to 700°C, preferably in a temperature range of 550°C to 650°C.

3. Method according to claim 1 or 2, **characterized in that** the mixture of pyrolysis gas and steam is heated, in the reaction zone (3), to 750°C to 1000°C, preferably to 900°C to 1000°C.

4. Method according to one of claims 1 to 3, **characterized in that** the reaction in the reaction zone (3) is carried out in the presence of a catalyst.

5. Method according to claim 4, **characterized in that** a catalyst that accelerates the reaction is added to the heat carrier that is transported in the circuit, and transported in the circuit with it.

6. Method according to one of the claims 1 to 5, **characterized in that** the heat carrier transported in the circuit consists of fireproof substances such as sand, gravel, crushed stone, aluminosilicate, corundum, greywacke, quartzite, or cordierite.

7. Method according to one of claims 1 to 5, **characterized in that** the heat carrier transported in the circuit consists of ceramic molded bodies.

8. Method according to one of claims 1 to 7, **characterized in that** the transport of the heat carrier circuit takes place exclusively by means of gravity, with the exception of the region of the bulk material conveyor (6).

9. Method according to claim 1, **characterized in that** the cool-down zone (119) of the heat carrier circuit and the heating mantle (102 a) of the pyrolysis apparatus (102) are combined in a housing, into a single unit.

10. Method according to claim 1, **characterized in that** the residual heat that remains in the intermediary, gaseous heating medium (18) behind the pyrolysis zone (2) is used to generate the steam that is required for the process.

11. Method according to claim 1, **characterized in that** the flue gas (12) that leaves the heating zone (13) is used for preheating the combustion of the solid residues of pyrolysis that contain carbon.

## Revendications

1. Procédé pour la production d'un produit gazeux riche en hydrogène présentant un pouvoir calorifique élevé à partir d'un matériau de départ sous forme de substances organiques ou des mélanges de substances, dans lequel le matériau de départ est dissocié, dans une zone de pyrolyse (2), par pyrolyse, en un résidu solide, contenant du carbone, et en gaz de pyrolyse en tant que phase volatile et les gaz de pyrolyse sont mélangés avec de la vapeur d'eau en tant qu'agent de réaction et postchauffés dans une zone de réaction (3) de manière telle qu'il se forme un produit gazeux présentant un pouvoir calorifique élevé, la chaleur nécessaire pour la pyrolyse et le postchauffage provenant au moins en grande partie de la combustion des résidus solides, contenant du carbone, de la pyrolyse et étant introduite dans l'installation via un matériau en vrac servant de support thermique, guidé en circuit, qui est chauffé dans une zone de chauffage (13) par les gaz chauds provenant de la combustion des résidus contenant du carbone, qui est ensuite mis en contact dans la zone de réaction (3) avec le mélange de gaz de pyrolyse et de vapeur d'eau, qui introduit ensuite au moins une partie de sa chaleur perceptible dans la zone de pyrolyse (2) et qui est ensuite ramené au moyen d'un transporteur (6) de matériau en vrac à l'entrée du circuit du support thermique, **caractérisé en ce que** dans le circuit du support thermique, en amont de la zone de chauffage (13), dans laquelle le circuit du support thermique est chauffé à une température de 1050°C à 1100°C, est disposée une zone de préchauffage (4) dans laquelle le matériau en vrac est préchauffé par le produit gazeux chaud provenant de la zone de réaction (3) et absorbe la plus grande partie de sa chaleur et **en ce que** le transfert de chaleur du circuit du support thermique au matériau de départ dans l'étape de pyrolyse (2) a lieu de manière indirecte et sans contact direct avec le matériau en vrac via un milieu chauffant (17) intermédiaire, gazeux, qui est chauffé dans une zone de refroidissement (19) du circuit du support thermique et qui cède ensuite une partie de la chaleur absorbée dans la zone de pyrolyse (2) via l'enveloppe chauffante d'un appareil de pyrolyse au matériau de départ à pyrolyser, le circuit du support thermique étant refroidi dans la zone de refroidissement (19) avant l'entrée dans le transporteur (6) de matériau en vrac à une température entre la température ambiante et 200°C.

2. Procédé selon la revendication 1, **caractérisé en ce que** la pyrolyse du matériau de départ est réalisée dans une plage de température de 500°C à 700°C, de préférence dans une plage de température de 550°C à 650°C.

3. Procédé selon la revendication 1 ou 2, **caractérisé en ce que** le mélange de gaz de pyrolyse et de vapeur d'eau dans la zone de réaction (3) est chauffé à 750°C jusqu'à 1000°C, de préférence à 900°C jusqu'à 1000°C.

4. Procédé selon l'une quelconque des revendications 1-3, **caractérisé en ce que** la réaction dans la zone de réaction (3) est réalisée en présence d'un catalyseur.

5. Procédé selon la revendication 4, **caractérisé en ce qu'**un catalyseur accélérant la réaction est ajouté au support thermique guidé en circuit et est guidé en circuit avec celui-ci.

6. Procédé selon l'une quelconque des revendications 1-5, **caractérisé en ce que** le support thermique guidé en circuit est constitué par des substances réfractaires, telles que le sable, le gravier, des grenailles, l'aluminosilicate, le corindon, la grauwacke, le quartzite ou la cordiérite.

7. Procédé selon l'une quelconque des revendications 1-5, **caractérisé en ce que** le support thermique guidé en circuit est constitué par des corps façonnés céramiques.

8. Procédé selon l'une quelconque des revendications 1-7, **caractérisé en ce que** le transport du support thermique dans le circuit du support thermique a lieu exclusivement par gravité sauf dans la zone du transporteur (6) du matériau en vrac.

9. Procédé selon la revendication 1, **caractérisé en ce que** la zone de refroidissement (119) du circuit du support thermique et l'enveloppe chauffante (102a) de l'appareil de pyrolyse (102) sont rassemblées dans une enveloppe en un appareil unique.

10. Procédé selon la revendication 1, **caractérisé en ce que** la chaleur résiduelle restant dans le milieu chauffant (18) intermédiaire, gazeux, en aval de la zone de pyrolyse (2) est utilisée pour produire la vapeur d'eau nécessaire pour le procédé.

11. Procédé selon la revendication 1, **caractérisé en ce que** le gaz de fumée (12) qui quitte la zone de chauffage (13) est utilisé pour chauffer l'air de combustion (16) pour la combustion du résidu solide, contenant du carbone, de la pyrolyse.
